# FASCICULE DE BREVET EUROPEEN

(11) **EP 2 286 415 B1**
(45) Date de publication et mention de la délivrance du brevet: **07.08.2013**
(21) Numéro de dépôt: 09766082.3
(22) Date de dépôt: 16.06.2009
(51) Int. Cl.: G21C 19/06, G21F 5/012, G21F 5/10

(54) **INTERNE D'ETUI ET ETUI POUR L'ENTREPOSAGE A SEC D'ELEMENTS COMBUSTIBLES IRRADIES; PROCÈDE D'ENTREPOSAGE**
INNERER AUFBAU EINES GEHÄUSES UND GEHÄUSE ZUM TROCKENLAGERN VON BESTRAHLTEN BRENNSTOFFELEMENTEN; UND ZWISCHENLAGERUNGSVERFAHREN
CASING INTERIOR AND CASING FOR THE DRY INTERMEDIATE STORAGE OF IRRADIATED FUEL ELEMENTS, AND INTERMEDIATE STORAGE METHOD

(30) Priorité: 17.06.2008 FR 0853975
(43) Date de publication de la demande: 23.02.2011
(73) Titulaire: Areva NC, 75009 Paris (FR)
(72) Inventeur: BARA, Jacques, F-78125 Hermeray (FR); MOTTIER, Daniel, F-78320 Levis Saint Nom (FR)
(74) Mandataire: Le Roux, Martine
(86) Numéro de dépôt international: PCT/FR2009/051147
(87) Numéro de publication internationale: WO 2009/153520

(56) Documents cités:
- EP-A- 0 158 849
- DE-A1- 3 938 519
- JP-A- 2 186 300
- JP-A- 2002 286 891

## Description

La présente invention a pour objet :
- un interne d'étui (dispositif d'agencement interne d'un étui ; panier ou casier, interne à un étui) convenant à l'entreposage à sec d'au moins un élément combustible irradié ;
- un étui d'entreposage à sec équipé d'un tel interne d'étui ; et
- un procédé d'entreposage à sec d'au moins un élément combustible irradié, basé sur l'utilisation de tels étui et interne d'étui.

L'interne d'étui selon l'invention comprend, de façon caractéristique, une structure mixte au sein de laquelle la fonction thermique est dissociée de la fonction de tenue mécanique. Ceci est explicité plus avant.

Dans la description ci-après de l'invention présentement revendiquée, on entend par élément combustible irradié un élément combustible irradié ou un ensemble d'au moins deux éléments combustibles irradiés superposés. Un tel élément combustible irradié présente une structure verticale.

L'invention a été développée dans le contexte de l'entreposage à sec d'éléments combustibles irradiés. De tels éléments combustibles irradiés sont classiquement entreposés :
- soit dans l'attente d'un conditionnement convenant à leur stockage définitif (ils sont alors traités en tant que déchets) ;
- soit dans l'attente d'un traitement/recyclage en vue de leur valorisation.

A ce jour, l'entreposage à sec d'éléments combustibles irradiés n'est mis en oeuvre que pour des éléments combustibles irradiés de faible puissance. La gestion de la conduction de la chaleur, pour assurer le refroidissement, n'est ainsi pas un problème critique. Lesdits éléments de faible puissance, à l'unité ou par deux, superposés, sont mis dans des étuis. Lesdits étuis ne sont pas équipés de structure de maintien. Lesdits étuis sont placés dans des paniers, lesquels paniers sont introduits dans des puits ventilés.

Dans un contexte voisin, on gère les problèmes de dissipation de calories. Ainsi, utilise-t-on, pour le transport d'éléments combustibles irradiés de forte puissance, des châteaux de transport spécifiques. Il s'agit de structures lourdes, massives dans lesquelles on trouve, superposés, des blocs en aluminium coulé ; lesdits blocs stabilisant les éléments combustibles irradiés. Au sein desdits châteaux, lesdits blocs assurent une fonction thermique et une fonction de tenue mécanique.

Le problème technique abordé dans le cadre de la présente invention a été principalement celui de l'entreposage à sec, à l'unité ou par lots, d'éléments combustibles de plus forte puissance (présentant notamment, chacun, une puissance susceptible d'atteindre 5 kW) que ceux entreposés selon l'art antérieur. On voit plus loin que le système de l'invention convient pour l'entreposage à sec de plusieurs éléments combustibles dans un même étui.

Quelle que soit la puissance en cause, il convient bien évidemment d'assurer le bon refroidissement des éléments combustibles irradiés entreposés pour éviter toute dégradation due à une température excessive, pour assurer une tenue à long terme de la gaine desdits éléments combustibles. Le problème est d'autant plus critique que ladite puissance est élevée.

La bonne conduction de la chaleur de l'(des) élément(s) combustible(s) irradié(s) stocké(s) vers le système de refroidissement du stockage devient, dans un contexte de puissance élevée, un paramètre très important, voire crucial. Cette conduction de la chaleur doit être assurée, évidemment, tout en maintenant l'(les) élément(s) combustible(s) irradié(s), en place, stable(s) dans l'étui d'entreposage, ce qui signifie que la structure de l'étui, y compris son interne d'étui (agencement interne), doit conserver sa géométrie pendant toute la durée de l'entreposage.

Confrontés à un tel problème technique, les inventeurs proposent une solution innovante et performante basée sur une structure originale d'interne d'étui, structure étagée, mixte, à modules en un matériau bon conducteur thermique (avantageusement l'aluminium), avec dissipateurs thermiques évidés.

Selon son premier objet, la présente invention propose donc des internes d'étui originaux. Le concept d'interne d'étui est familier à l'homme du métier. On peut également parler de dispositif d'agencement interne d'un étui, convenant, dans le cas présent, au positionnement stable des éléments combustibles à entreposer en son sein.

Les internes d'étui selon l'invention conviennent donc à l'entreposage à sec d'au moins un élément combustible irradié. Ils présentent une structure originale. De façon caractéristique, ils présentent
une structure étagée, qui comprend au moins deux modules superposés ;
chacun desdits modules, en un matériau bon conducteur thermique, avec alvéole(s) de réception pour le(s)dit(s) élément(s) combustible(s) en partie centrale et au moins un dissipateur de chaleur évidé en périphérie (ci-après dénommé dissipateur de chaleur périphérique évidé), étant agencé sur une plaque support ajourée de façon à permettre le passage du(des)dit(s) élément(s) combustible(s) ; les plaques support ajourées de ladite structure étant positionnées et assemblées au moyen d'un système de maintien avec un jeu ménagé entre le haut du module d'un étage et la plaque support ajourée de l'étage immédiatement au-dessus.

Comme annoncé, ladite structure est mixte :
- la fonction thermique est assurée au moyen de modules en un matériau bon conducteur thermique (bon conducteur (bon dissipateur) de la chaleur). Par matériaux bons conducteurs thermiques, on entend dans le présent texte, des matériaux dont la conductivité thermique est supérieure à 150 W.m⁻¹.K⁻¹. Une telle définition est communément admise par les spécialistes des matériaux. Des matériaux de ce type (présentant une telle conductivité thermique) sont connus, communément utilisés à ce jour ; d'autres matériaux de ce type (présentant une telle conductivité thermique) sont susceptibles d'être développés dans le futur. L'homme du métier connaît notamment l'argent, le cuivre, l'or et l'aluminium. Aucun de ces métaux *n'est a priori* écarté, à titre de matériau constitutif des modules. Toutefois, l'on conçoit bien que l'utilisation de l'argent ou de l'or pose plus particulièrement problème en terme de coût, que l'utilisation de l'aluminium est a coup sûr préférée. Le cuivre peut assurément être employé mais l'on explique ci-après pourquoi l'aluminium est préféré. Le cuivre et l'aluminium sont tous deux de bons conducteurs thermiques, mais le cuivre a l'inconvénient d'être plus cher en approvisionnement et en mise en oeuvre. Le cuivre est en effet beaucoup plus difficilement adaptable aux géométries souhaitées que l'aluminium. L'aluminium est donc le matériau constitutif préféré des modules de l'interne d'étui selon l'invention. Il est bon conducteur thermique (susceptible de subir un traitement de surface pour améliorer encore son émissivité), il est extrudable et de surcroît léger. Il est toutefois bien connu que sa résistance mécanique diminue de façon sensible avec l'augmentation de la température ; d'où le recours à une structure support (voir plus loin). Cette remarque peut tout à fait valoir pour un autre matériau bon conducteur thermique ;

- la fonction de tenue mécanique est assurée au moyen d'une structure support : plaques support ajourées et système de maintien. Ladite structure support est évidemment en un matériau à haute tenue mécanique, résistant à la chaleur. Elle est avantageusement réalisée en acier inoxydable. On conçoit que d'autres matériaux, tel le titane, peuvent convenir. On comprend qu'en termes de coût, l'acier inoxydable est préféré.

L'(Les) alvéole(s) des modules et l'(les)ouverture(s) des plaques support ainsi que le positionnement relatif desdits modules et plaques support conviennent bien évidemment au positionnement, à la verticale, des éléments combustibles.

Chaque module comporte au moins une alvéole en partie centrale et au moins un dissipateur de chaleur en périphérie. De façon caractéristique, le(s)dit(s) dissipateur(s) de chaleur périphérique(s) n'est (ne sont) pas un(des) élément(s) massif(s), mais une(des) pièce(s) évidée(s). On a généralement plusieurs dissipateurs de chaleur agencés en périphérie de chaque module. Dans le cadre de l'invention, la fonction thermique est assurée avec une optimisation de la quantité de matière nécessaire, d'où des économies substantielles, notamment dans un contexte de production en série.

Selon une variante, les modules de l'étui comportent une unique alvéole en partie centrale. Ladite unique alvéole est prévue pour recevoir un élément combustible irradié, *a priori* un élément combustible de forte puissance, d'une puissance telle que son co-stockage avec un autre élément pose problème (en termes de puissance).

Selon une autre variante, préférée, plusieurs alvéoles sont agencées dans la structure de chaque module constitutif de l'interne d'étui. Ledit interne d'étui est donc prévu pour l'entreposage d'un lot d'éléments combustibles, pour l'entreposage, à un même niveau, de plusieurs éléments combustibles... au sein d'un même étui. Ceci est original : l'art antérieur associant un interne d'étui pour un élément combustible (ou deux éléments superposés) à un étui, donc un élément combustible (ou deux éléments combustibles superposés) à un étui. On note incidemment qu'un interne d'étui prévu pour l'entreposage de n éléments combustibles (comportant des modules à n alvéoles) convient tout à fait pour l'entreposage de m éléments combustibles : m ≤ n. Le choix de la valeur de m se fait en fonction de nombreux paramètres et avant toute chose en fonction de la puissance thermique en cause.

Dans le cadre de l'une ou l'autre des variantes ci-dessus, chaque logement vertical résultant de l'alignement des alvéoles des modules superposés est donc apte à recevoir un unique élément combustible irradié ou un ensemble d'au moins deux éléments combustibles irradiés superposés.

Un jeu fonctionnel est laissé entre le haut d'un module et la plaque support ajourée située immédiatement au-dessus. Cette disposition autorise la libre dilatation (sans contrainte) de ce module (avantageusement en aluminium), dont la dilatation peut être supérieure à celle de certains des éléments du système de maintien (du type tirants en acier inoxydable, par exemple (voir plus loin)). On note incidemment ici que la plaque "support" ajourée supérieure ne supporte pas de module. Elle est dénommée plaque support par analogie. Elle est avantageusement identique aux autres plaques support, ceci n'est toutefois pas une obligation.

L'interne d'étui selon l'invention comprend donc des modules superposés, chacun desdits modules comportant une(des) alvéole(s) apte(s) à recevoir l'(les) élément(s) combustible(s) irradié(s) et au moins un dissipateur de chaleur périphérique évidé qui assure l'évacuation de la chaleur dudit(desdits) élément(s) combustible(s) vers la paroi de l'étui (à l'intérieur duquel ledit interne d'étui est appelé à être agencé).

De manière avantageuse, les éléments constitutifs d'un module - alvéole(s) + dissipateur(s) de chaleur - sont des éléments extrudés (obtenus par extrusion).

La hauteur des modules résulte de calculs mécaniques et des possibilités de réalisation. Des hauteurs mises en jeu, de l'ordre du mètre pour un module, permettent une fabrication aisée des modules (en aluminium, notamment) par extrusion. Une telle mise en oeuvre industrielle est particulièrement avantageuse en ce qu'elle permet de limiter le coût desdits modules.

Le nombre de modules d'un interne d'étui est évidemment ajusté à la longueur de l'(des) élément(s) combustible(s) à entreposer au sein dudit interne d'étui. Ce nombre dépend donc généralement de ladite longueur et des technologies de fabrication en cause. On peut indiquer que la structure étagée d'un interne d'étui selon l'invention peut ainsi comporter 2, 3, 4, 5 ou 6 étages (= 2, 3, 4, 5 ou 6 modules superposés). Cette indication est, en aucune façon, limitative.

De manière générale et plus particulièrement dans ce contexte avantageux d'éléments extrudés constituant les modules, on a, très avantageusement, le au moins un dissipateur périphérique (l'(unique) dissipateur périphérique ou les dissipateurs périphériques) desdits modules à base d'un élément extrudé avec ou sans ailette(s) et avec surface(s) de rayonnement. Ledit au moins un dissipateur de chaleur périphérique peut ainsi se trouver optimisé en termes de poids, de performance, de coût, de facilité de fabrication... Au sein d'un étui de section circulaire, on trouve avantageusement un interne d'étui de section circulaire lui aussi, et donc très avantageusement au moins un dissipateur périphérique avec surface(s) courbe(s) de rayonnement (et avec ou sans ailette(s)).

Les modules des internes d'étui de l'invention sont ainsi avantageusement constitués de plusieurs éléments extrudés qui sont assemblés entre eux par vissage ou par tout autre méthode d'assemblage (soudage, par exemple) et positionnés de manière précise, au moyen de pions, par exemple. Un desdits éléments extrudés (pré-existants) peut ainsi consister en au moins une alvéole pré-constituée. A partir de ladite au moins une alvéole pré-constituée, on est susceptible, en ajoutant d'autres éléments extrudés, de construire le module (avec alvéole(s) centrale(s) et dissipateur(s) de chaleur périphérique(s)). Pour des géométries réduites (simples), le module peut être réalisé en une unique pièce extrudée.

L'épaisseur des parois des modules, plus précisément des parois de la au moins une alvéole (de l'(unique) alvéole ou des alvéoles) et du(des) dissipateur(s) de chaleur, est avantageusement optimisée en vue d'assurer une bonne conduction thermique pour une masse (d'aluminium, notamment) la plus faible possible.

La géométrie et la capacité d'entreposage en éléments combustibles d'un interne d'étui de l'invention résulte de calculs thermiques : elles dépendent de la puissance des combustibles à entreposer. Le nombre d'alvéoles est donc adapté à la puissance des combustibles à entreposer. La forme desdites alvéoles est bien évidemment adaptée à, voire optimisée en référence à, la forme desdits combustibles à entreposer. Un interne d'étui de l'invention (de section circulaire) comporte ainsi avantageusement 1, 4, 7, 12 ou 15 alvéoles (de section carrée) ; ce qui correspond à l'optimum de remplissage d'un cercle avec des alvéoles de section carrée. Un tel optimum est recherché pour obtenir la meilleure capacité lors de l'entreposage. On note incidemment toutefois que l'interne d'étui de l'invention et son étui associé ne présentent pas forcément une section circulaire, que les alvéoles ne présentent pas forcément des sections carrées et on rappelle incidemment que l'entreposage peut être mis en oeuvre avec des alvéoles vides (il est alors non optimisé). Il y a évidemment avantageusement optimisation en nombre d'alvéoles et forme desdites alvéoles, d'une part (en référence à la structure de l'interne d'étui) et en nombre d'alvéoles occupées, d'autre part (en référence au procédé d'entreposage mis en oeuvre au sein d'un étui équipé d'un interne d'étui selon l'invention). L'homme du métier est à même de mettre en oeuvre cette optimisation.

La structure support d'un interne d'étui selon l'invention renferme donc les plaques support ajourées (chaque module repose sur une telle plaque, ajourée pour permettre le passage du (des) élément(s) combustible(s)) et le système de maintien de l'ensemble desdites plaques.

Pour assurer sa fonction, ladite structure support est en un matériau à haute tenue mécanique. On a vu plus haut qu'elle est avantageusement en acier inoxydable. On a également vu plus haut que le matériau constitutif des modules est avantageusement l'aluminium. On associe très avantageusement dans un interne d'étui de l'invention des modules en aluminium et une structure support en acier inoxydable.

Le système de maintien comprend avantageusement des tirants qui assurent une double fonction. D'une part, ils assurent le positionnement et l'assemblage des différentes plaques support et d'autre part, ils conviennent pour transférer la charge de l'interne d'étui à l'étui dans lequel il est destiné à être logé. Très avantageusement, ces mêmes tirants sont utilisés pour assurer le positionnement (stable) de chaque module sur sa plaque support. Dans le cadre de cette variante très avantageuse, lesdits tirants assurent donc une triple fonction.

De tels tirants sont donc avantageusement réalisés en acier inoxydable. Dans le cadre d'un mode de réalisation préféré, des tirants, dont la longueur correspond à celle d'un étage (d'un module), sont emboîtés entre eux par vissage et appelés à être stabilisés de la même façon (par vissage) en parties inférieure et supérieure de l'interne d'étui. Au moins trois tirants interviennent généralement à chaque étage.

Dans la structure de l'interne d'étui selon l'invention, la reprise de la charge d'un module s'effectue par l'intermédiaire de chaque plaque support et par le système de maintien (tirants de la variante avantageuse explicitée ci-dessus). De ce fait, un module de ladite structure ne subit pas le poids des modules situés au-dessus de lui et la contrainte mécanique qui lui est appliquée se trouve ainsi réduite, compatible avec les caractéristiques mécaniques de son matériau constitutif (aluminium, de préférence). La charge de l'ensemble de l'interne d'étui est appelée à être supportée par l'étui (le fond de l'étui) au sein duquel ledit interne d'étui est destiné à être agencé.

On a indiqué ci-dessus, de façon nullement limitative, que l'interne d'étui selon l'invention peut notamment comporter 2, 3, 4, 5 ou 6 étages (2, 3, 4, 5 ou 6 modules superposés).

De façon nullement limitative, on peut également indiquer ici que les alvéoles des modules présentent une section carrée, hexagonale ou circulaire. En tout état de cause, ladite section doit convenir pour que lesdites alvéoles puissent recevoir les éléments combustibles. Les ouvertures des plaques support doivent de la même façon convenir. On a généralement lesdites alvéoles et lesdites ouvertures de même forme, de même dimension.

Les propos ci-dessus sont illustrés de façon nullement limitative par les figures annexées.

Selon son deuxième objet, la présente invention concerne un étui pour l'entreposage à sec d'au moins un élément combustible irradié. De façon caractéristique, ledit étui renferme un interne d'étui tel que décrit ci-dessus (premier objet de la présente invention) et comporte un fond capable de supporter la masse dudit interne d'étui et celle dudit au moins un élément combustible appelé à y prendre appui (celle de l'(unique) élément combustible appelé à y prendre appui ou celle des éléments combustibles appelés à y prendre appui). Par fond dudit étui, on entend la structure de celui-ci, sur laquelle vont reposer l'interne d'étui et la partie inférieure dudit au moins un élément combustible stocké, après son passage au travers de la plaque support inférieure (plaque support du premier étage, du premier module) de l'interne d'étui. En vis-à-vis dudit fond, ledit étui est évidemment susceptible de recevoir un couvercle pour constituer un étui étanche.

Avantageusement, ledit étui de l'invention et son interne d'étui ont des sections de sensiblement même(s) dimension(s) (de sensiblement même diamètre, dans l'hypothèse la plus fréquente où lesdits étui et interne d'étui sont des cylindres droits de section circulaire). En tout état de cause, lesdits étuis et internes d'étui présentent avantageusement la forme de cylindres droits. Le jeu entre l'étui de l'invention et son interne d'étui est avantageusement le plus réduit possible, en référence à l'optimisation de la dissipation thermique. Il doit toutefois permettre l'introduction et le positionnement dudit interne d'étui dans ledit étui, *i.e.* la mise en place des modules dans l'étui.

L'interne d'étui est avantageusement stabilisé à l'intérieur de l'étui. On peut ainsi prévoir des systèmes de maintien, convenant pour éviter le déplacement dudit interne d'étui (de ses modules) au sein de l'étui, plus particulièrement en cas de renversement dudit étui.

Selon son troisième objet, la présente invention concerne un procédé d'entreposage à sec d'au moins un élément combustible irradié (d'un (unique) élément combustible irradié ou d'éléments combustibles irradiés). De façon classique, ledit procédé comprend :
- le conditionnement stable dudit au moins un élément combustible irradié dans un étui au sein duquel la chaleur dégagée par ledit au moins un élément est dissipée sans altération de la structure dudit au moins un élément,
- l'entreposage dudit étui étanche dans un puits vertical refroidi par circulation d'air.

De façon caractéristique, l'étui utilisé dans le cadre dudit procédé est un étui de l'invention (second objet de la présente invention), c'est-à-dire un étui équipé d'un interne d'étui de l'invention (premier objet de la présente invention).

Un tel étui permet une optimisation de l'entreposage : entreposer le maximum de combustibles (le maximum de puissance en fait) dans le minimum de volume.

Selon des variantes de mise en oeuvre particulièrement préférées :
- le procédé de l'invention est mis en oeuvre avec un étui qui renferme plusieurs éléments combustibles (à un même niveau) ; et/ou
- ledit procédé de l'invention concerne l'entreposage d'au moins un élément combustible de forte puissance (jusqu'à 5 kW ; par exemple, issu d'un réacteur à eau légère).

Le procédé de l'invention n'est pas limité à ses variantes de mise en oeuvre particulièrement préférées. Ainsi, il peut aussi bien convenir à l'entreposage d'un unique élément combustible de forte puissance, qu'à l'entreposage d'un unique ou de plusieurs éléments combustibles de faible ou plus ou moins forte puissance. Qui peut le plus, peut le moins. On rappelle que la structure de l'étui en cause a été optimisée pour une évacuation maximale de la chaleur dégagée.

On se propose maintenant de décrire l'invention en référence aux figures annexées. Lesdites figures montrent deux modes de réalisation d'un dispositif (interne d'étui) de l'invention.

La figure 1 est une vue, en coupe longitudinale, d'un étui de l'invention, c'est-à-dire équipé d'un interne d'étui de l'invention. Ledit étui est montré, vide, sans élément combustible irradié disposé en son sein.

La figure 2 est une vue en perspective, éclatée, d'un module de l'interne d'étui, montré sur la figure 1, entre deux plaques support.

Les figures 3A, 3B et 3C sont des vues de dessus des éléments constitutifs du module montré sur la figure 2. Plus précisément, la figure 3A montre un dissipateur de chaleur périphérique d'angle ; la figure 3B un dissipateur de chaleur périphérique en forme de T et la figure 3C l'alvéole centrale.

La figure 4 est une vue de dessus d'un module d'un interne d'étui selon un autre mode de réalisation.

La figure 5 montre en perspective une plaque support d'un interne d'étui selon ledit autre mode de réalisation.

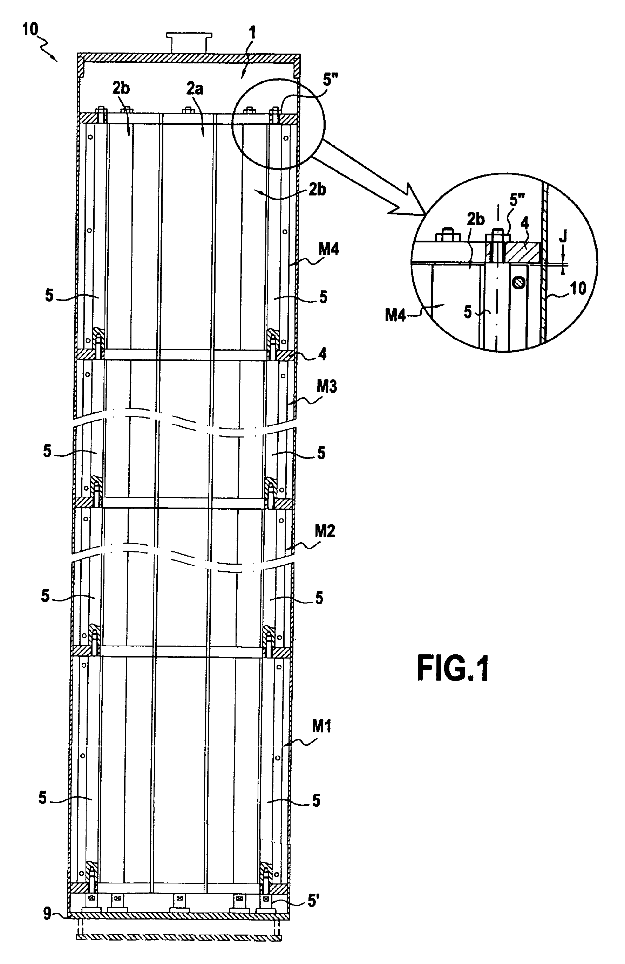

Sur la figure 1, on montre donc un interne d'étui 1 agencé à l'intérieur d'un étui 10. Lesdits interne d'étui 1 et étui 10 présentent une forme cylindrique (celle de cylindres droits à section circulaire).

L'interne d'étui 1 comporte quatre étages. Sa structure comprend quatre modules M1, M2, M3 et M4, disposés chacun, sur une plaque support ajourée 4. Un jeu J est ménagé entre le haut de chaque module (un tel jeu autorise la libre dilatation dudit module, notamment en aluminium) et la plaque support du module de l'étage supérieur.

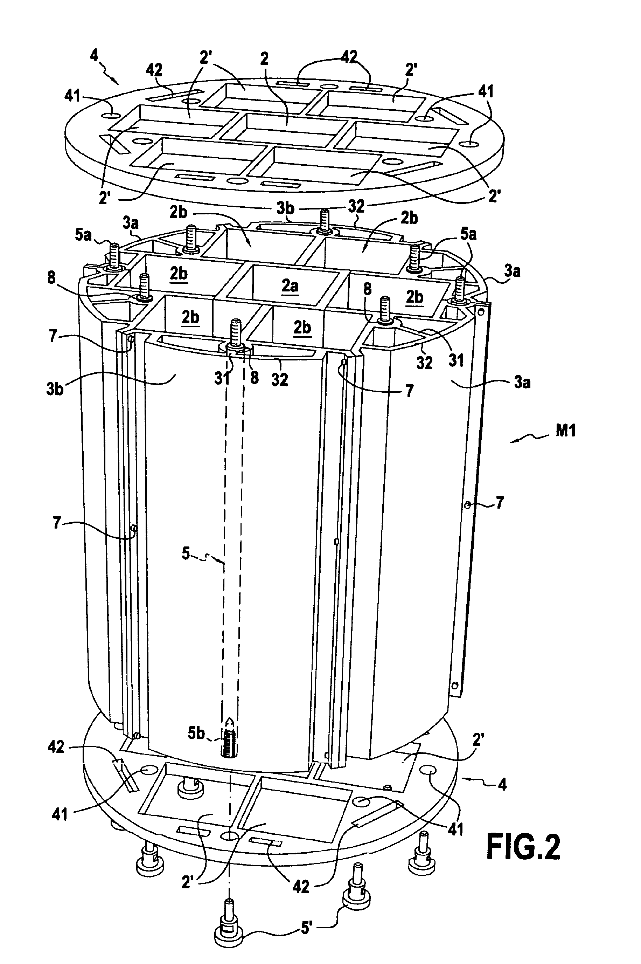

Les alvéoles 2a (centrales) et 2b (1^{ère} couronne) des quatre modules M1, M2, M3 et M4 ainsi que les ouvertures correspondantes 2 (centrales) et 2' (1^{ère} couronne) des plaques support 4 (voir la figure 2) sont évidemment mises en coïncidence de façon à générer dans la structure de l'interne d'étui 1 les logements verticaux pour les éléments combustibles.

Les tirants 5 sont utilisés, dans le cadre du mode de réalisation avantageux représenté :
- pour positionner et assembler les plaques support 4 entre elles,
- pour permettre le transfert de la charge de l'interne d'étui 1 à l'étui 10. On a montré en 5' une vis de fixation d'un tirant 5 inférieur posée sur la partie basse 9 de l'étui 10 et en 5" un écrou de fixation d'un tirant 5 supérieur à la plaque "support" 4 supérieure de l'interne d'étui 1. On comprend qu'ainsi la reprise de la charge d'un module Mi s'effectue par l'intermédiaire de chaque plaque support 4 et par les tirants 5, qu'ainsi la charge de l'ensemble de l'interne d'étui 1 est supportée par l'étui 10,
- pour positionner les modules M1, M2, M3 et M4, chacun, respectivement, sur sa plaque support 4 (voir la figure 2).

La figure 2 montre donc le module inférieur M1 (identique aux autres modules M2, M3 et M4) ainsi que la plaque support 4 inférieure (plaque support dudit module M1) et la plaque support 4 intermédiaire (plaque support du module M2, ménagée entre lesdits modules M1 et M2).

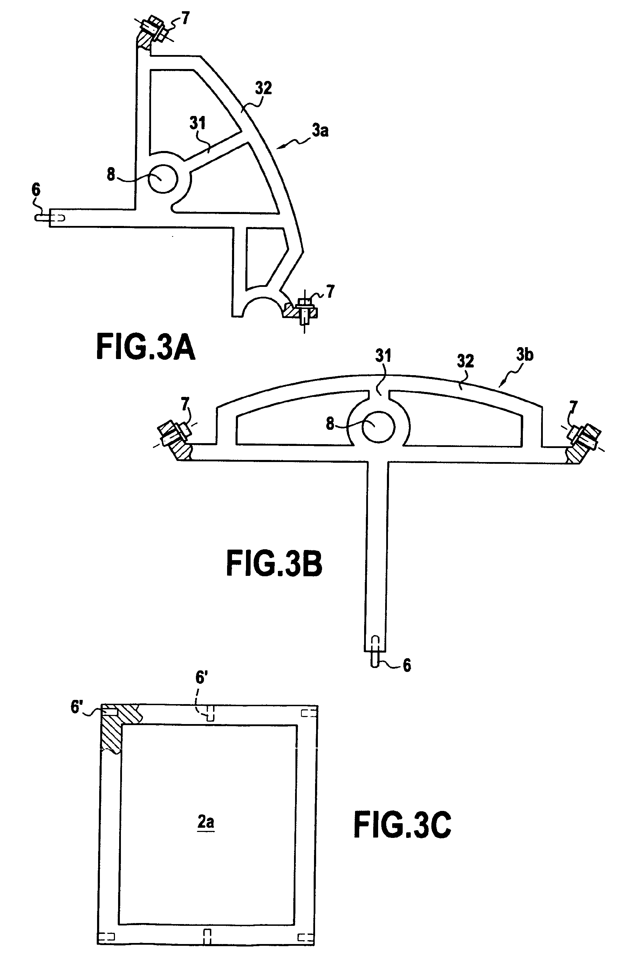

Le module M1 comprend sept alvéoles : l'alvéole centrale 2a, pré-constituée, et six alvéoles de couronne 2b, obtenues par construction, suite à la mise en place des dissipateurs de chaleur périphériques 3a et 3b. Ces dissipateurs de chaleur présentent des structures évidées, de deux types de géométrie. Ils sont montrés sur ladite figure 2 ainsi que sur les figures 3A et 3B. Les dissipateurs 3a, au nombre de quatre, sont des dissipateurs d'angle ; les dissipateurs 3b, au nombre de deux, sont en forme de T. Lesdits dissipateurs 3a et 3b présentent des géométries optimisées en référence à leurs performances, au compromis poids/performance/facilité de fabrication. Il s'agit donc de structures évidées, obtenues par extrusion, avec ailette 31 et surface de rayonnement courbe 32, particulièrement opportunes en référence au rayonnement thermique.

Dans la structure desdits dissipateurs 3a et 3b, il est prévu des logements 8 pour les tirants 5. Lesdits tirants 5 ont leurs extrémités 5b et 5a filetées de façon à coopérer, respectivement, en partie inférieure, avec les vis de fixation 5' (dans la mesure où M1 est le module du premier étage de l'interne d'étui 1) et, en partie supérieure, avec l'extrémité inférieure filetée 5b du tirant 5 du module M2 (de l'étage supérieur, non représenté). L'extrémité 5a du tirant 5 du module M4 est appelée, elle, à coopérer avec l'écrou de fixation 5" (voir la figure 1 et la description ci-dessus de ladite figure).

L'alvéole centrale 2a est positionnée au centre des autres éléments (dissipateurs 3a et 3b) au moyen de pions de centrage 6. On réalise, en considérant les figures 3A, 3B et 3C, que, dans l'épaisseur des parois de ladite alvéole centrale 2a sont en fait prévus des logements 6' pour lesdits pions de centrage 6, prévus sur les dissipateurs 3a et 3b. Lesdits dissipateurs 3a et 3b (six éléments périphériques) sont réunis entre eux par vissage. On a schématisé en 7 les vis en cause.

On voit clairement sur la figure 2 que, selon le mode de réalisation avantageux présenté, les tirants 5 assurent le positionnement, stable, du module M1 (de ses alvéoles constitutives 2a et 2b) sur la plaque support 4 (inférieure).

Les plaques support 4 (plaque inférieure, support du module M1 et plaque supérieure, support du module M2) sont évidemment ajourées pour permettre le passage des éléments combustibles à stocker dans l'étui 1, c'est-à-dire que lesdites plaques 4 présentent des ouvertures 2 et 2' correspondant, respectivement, aux alvéoles 2a et 2b. Lesdites plaques 4 présentent également des trous 41 pour le passage des tirants 5. Au niveau de ces trous 41, sont plus précisément solidarisés, pour la plaque inférieure, les extrémités inférieures des tirants 5 (représentés) aux vis de fixation 5' et, pour la plaque supérieure, les extrémités supérieures desdits tirants 5 aux extrémités inférieures des tirants 5 non représentés sur la figure 2 (mais représentés sur la figure 1) du module M2, de l'étage supérieur. Lesdites plaques 4 présentent enfin des fentes 42 qui assurent une communication entre les étages de l'interne d'étui 1, disposé dans l'étui 10.

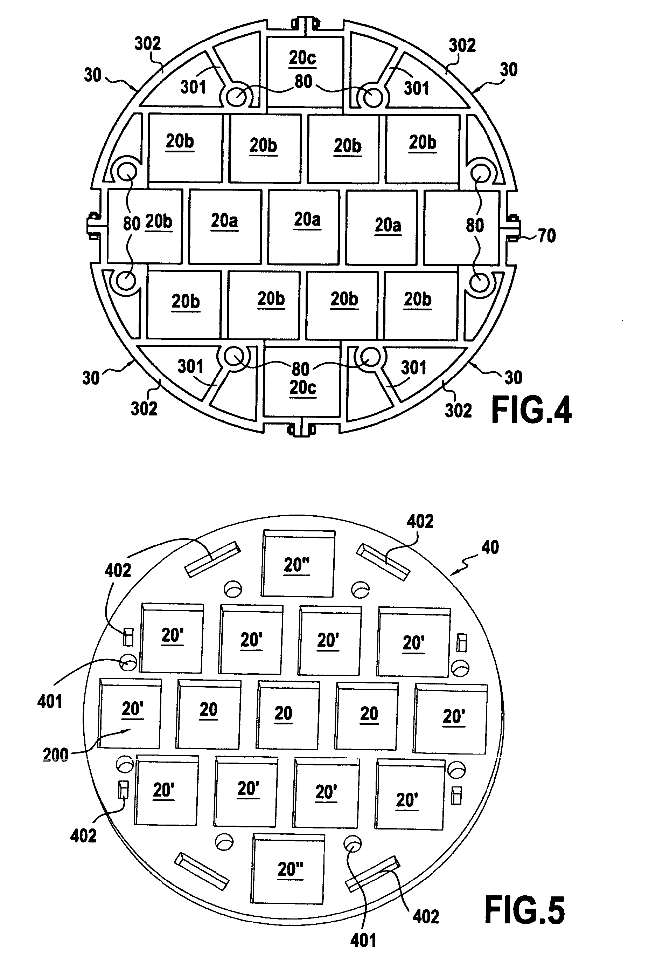

A la considération des figures 4 et 5, on réalise que, selon le second mode de réalisation représenté, l'interne d'étui de l'invention comprend quinze alvéoles : trois alvéoles dites centrales 20a, dix alvéoles dites d'une première couronne 20b et deux dites d'une seconde couronne 20c.

L'ensemble des alvéoles est réalisé à partir de simples morceaux de profilés, obtenus par extrudage puis assemblés par des points de soudure à leurs extrémités. Pour les alvéoles localisées en périphérie de l'ensemble, des dispositifs, également assemblés par points de soudure, sont installés pour assurer la liaison des alvéoles entre elles et pour assurer un bon positionnement de l'ensemble par rapport aux dissipateurs de chaleur périphériques 30.

Le module représenté résulte donc essentiellement du montage d'une première pièce comportant les alvéoles 20a et certaines parois des alvéoles 20b et 20c et des quatre dissipateurs de chaleur périphériques 30.

Lesdits dissipateurs 30 sont des pièces extrudées, évidées. Ils comportent des ailettes 301 et des surfaces de rayonnement courbes 302 ainsi que les passages 80 pour les tirants (non représentés). On a représenté en 70 les vis de fixation desdits dissipateurs 30 entre eux.

Sur la plaque support 40 (firgure 5), on retrouve
- les ouvertures 20, 20' et 20" correspondantes respectivement aux alvéoles 20a, 20b et 20c ;
- les trous 401 (correspondant aux passages 80) pour le passage des tirants ;
- les fentes 402 de communication entre les étages.

On se propose enfin d'illustrer l'invention par les deux exemples ci-après.

### Exemple 1

On a réalisé un interne d'étui 1 tel que représenté aux figures 1 et 2.

Ledit interne d'étui comprend 4 modules en aluminium de 1080 mm de hauteur, reposant chacun sur une plaque horizontale ajourée en acier inoxydable.

Chaque module est donc constitué de 7 éléments, aux trois géométries différentes :
- une alvéole centrale,
- deux dissipateurs périphériques en forme de T, et
- quatre dissipateurs périphériques d'angle
et comprend 7 alvéoles (voir les figures 1, 2, 3A, 3B et 3C et la description ci-dessus de celles-ci).

Ledit interne d'étui a été positionné dans un étui en acier inoxydable avec un jeu de 3 mm au rayon. L'agencement interne d'étui/étui est tel que représenté sur la figure 1.

L'étui obtenu est donc susceptible de recevoir jusqu'à 7 éléments combustibles irradiés, notamment de type REP (Réacteur à Eau Pressurisée). Un tel étui, avec interne d'étui à 7 alvéoles, convient parfaitement pour l'entreposage à sec d'éléments combustibles irradiés REP 900 ; la puissance thermique d'un tel élément combustible irradié pouvant atteindre 1,6 kW. Une telle puissance de 1,6 kW correspond à la puissance thermique résiduelle d'un élément combustible de type REP 900 MW stocké 5 ans après passage en réacteur.

Un tel étui est également susceptible de recevoir des ensembles (d'une hauteur totale adéquate) d'éléments combustibles irradiés superposés.

### Exemple 2

On a réalisé un interne d'étui avec des modules du type de celui représenté à la figure 4 et des plaques support du type de celle représentée à la figure 5 (interne d'étui "analogue" à celui montré à la figure 1).

Ledit interne d'étui comprend 4 modules en aluminium de 1080 mm de hauteur, reposant chacun sur une plaque horizontale ajourée en acier inoxydable.

Chaque module comprend donc :
- un ensemble constituant le corps de 15 alvéoles, et
- quatre dissipateurs périphériques évidés complétant le ceinturage des alvéoles périphériques.

Ledit interne d'étui a été positionné dans un étui en acier inoxydable avec un jeu de 3 mm au rayon. L'agencement interne d'étui/étui est du type de celui représenté sur la figure 1.

L'étui obtenu est donc susceptible de recevoir jusqu'à 15 éléments combustibles irradiés, notamment des combustibles REB (Réacteur à Eau Bouillante) de type 8 x 8. Un tel étui, avec interne d'étui à 15 alvéoles, convient parfaitement pour l'entreposage à sec de combustibles irradiés REB de type 8 x 8 ; la puissance thermique d'un tel combustible irradié pouvant atteindre 0,6 kW.

Un tel étui est également susceptible de recevoir des ensembles (d'une hauteur totale adéquate) d'éléments combustibles irradiés superposés.

## Revendications

1. Interne d'étui (1) convenant à l'entreposage à sec d'au moins un élément combustible irradié, **caractérisé en ce qu'**il présente une structure étagée qui comprend au moins deux modules (M1, M2, M3, M4) superposés, chacun desdits modules (M1, M2, M3, M4), en un matériau bon conducteur thermique, avec alvéole(s) de réception (2a, 2b ; 20a, 20b, 20c) pour le(s)dit(s) élément(s) combustible(s) en partie centrale et avec au moins un dissipateur de chaleur périphérique évidé (3a, 3b ; 30), étant agencé sur une plaque support ajourée (4 ; 40) de façon à permettre le passage du(des)dit(s) élément(s) combustible(s) ; les plaques support ajourées (4 ; 40) de ladite structure étant positionnées et assemblées au moyen d'un système de maintien (5'+5+5"), avec un jeu (J) ménagé entre le haut du module d'un étage (Mᵢ) et la plaque support ajourée (4 ; 40) de l'étage (Mᵢ₊₁) immédiatement au dessus.

2. Interne d'étui (1) selon la revendication 1, **caractérisé en ce que** ladite au moins une alvéole (2a, 2b ; 20a, 20b, 20c) et ledit au moins un dissipateur de chaleur périphérique évidé (3a, 3b ; 30) de chaque module (M1, M2, M3, M4) sont à base d'éléments extrudés.

3. Interne d'étui (1) selon la revendication 1 ou 2, **caractérisé en ce que** ledit au moins un dissipateur de chaleur périphérique évidé (3a, 3b ; 30) est un élément extrudé avec ou sans ailette(s) (31 ; 301) et avec surface(s) de rayonnement (32 ; 302).

4. Interne d'étui (1) selon la revendication 2 ou 3, **caractérisé en ce que** chaque module (M1, M2, M3, M4) de sa structure étagée comprend au moins une alvéole préconstituée (2a ; 20a).

5. Interne d'étui (1) selon l'une quelconque des revendications 1 à 4, **caractérisé en ce que** chaque module (M1, M2, M3, M4) de sa structure étagée comporte 1, 3, 4, 7, 12 ou 15 alvéoles (2a+2b ; 20a+20b+20c).

6. Interne d'étui (1) selon l'une quelconque des revendications 1 à 5, **caractérisé en ce que** lesdits modules sont en aluminium ; et/ou, avantageusement et, ledit système de maintien (5'+5+5") et lesdites plaques support ajourées (4 ; 40) sont en un matériau à haute tenue mécanique, sont avantageusement en acier inoxydable.

7. Interne d'étui (1) selon l'une quelconque des revendications 1 à 6, **caractérisé en ce que** ledit système de maintien (5'+5+5") comprend des tirants (5) pour, d'une part, le positionnement et l'assemblage des plaques support (4 ; 40) et, d'autre part, le transfert de charge dudit interne d'étui (1) à l'étui (10) dans lequel il est destiné à être logé.

8. Interne d'étui (1) selon la revendication 7, **caractérisé en ce que** lesdits tirants (5) assurent le positionnement de chaque module (M1, M2, M3, M4) sur sa plaque support (4 ; 40).

9. Interne d'étui (1) selon l'une quelconque des revendications 1 à 8, **caractérisé en ce que** sa structure étagée comporte 2, 3, 4, 5 ou 6 modules superposés (M1+M2+M3+M4).

10. Interne d'étui (1) selon l'une quelconque des revendications 1 à 9, **caractérisé en ce que** ladite au moins une alvéole (2a, 2b ; 20a, 20b, 20c) présente une section carrée, hexagonale ou circulaire.

11. Etui (10) convenant à l'entreposage à sec d'au moins un élément combustible irradié, **caractérisé en ce qu'**il renferme un interne d'étui (1) selon l'une quelconque des revendications 1 à 10 et comporte un fond (9) capable de supporter la masse dudit interne d'étui (1) et celle dudit au moins un élément combustible appelé à y prendre appui.

12. Etui (10) selon la revendication 11, **caractérisé en ce que** ledit étui (10) et son interne d'étui (1), qui présentent avantageusement la forme de cylindres droits, ont des sections de sensiblement même(s) dimension(s).

13. Procédé d'entreposage à sec d'au moins un élément combustible irradié comprenant :
- le conditionnement stable dudit au moins un élément combustible irradié dans un étui au sein duquel la chaleur dégagée par ledit au moins un élément est dissipé sans altération de la structure dudit au moins un élément,
- l'entreposage dudit étui étanche dans un puits vertical refroidi par circulation d'air,
**caractérisé en ce que** ledit étui est un étui (10) selon la revendication 11 ou 12.

14. Procédé selon la revendication 13, **caractérisé en ce que** ledit étui (10) renferme plusieurs éléments combustibles.

15. Procédé selon la revendication 13 ou 14, **caractérisé en ce que** ledit au moins un combustible irradié est un élément dont la puissance est inférieure ou égale à 5 kW.

## Patentansprüche

1. Gehäuseinnenanordnung (1), die sich für die trockene Zwischenlagerung wenigstens eines abgebrannten Brennelements eignet, **dadurch gekennzeichnet, daß** sie eine Stufenstruktur aufweist, die wenigstens zwei übereinander angeordnete Module (M1, M2, M3, M4) umfaßt, wobei ein jedes der Module (M1, M2, M3, M4) aus einem gut wärmeleitenden Material, mit Aufnahmezellen (2a, 2b; 20a, 20b, 20c) für das (die) Brennelement(e) im mittleren Teil und mit wenigstens einem umfangseitigen ausgehöhlten Kühlkörper (3a, 3b; 30), auf einer durchbrochenen Tragplatte (4; 40) derart angeordnet ist, daß es den Durchgang des (der) Brennelement(e)s ermöglicht, wobei die durchbrochenen Tragplatten (4; 40) der Struktur mittels eines Haltesystems (5'+5+5"), mit einem zwischen dem oberen Teil des Moduls einer Stufe (Mᵢ) und der durchbrochenen Tragplatte (4; 40) der unmittelbar darüber liegenden Stufe (Mᵢ₊₁) ausgebildeten Spiel (J), positioniert und verbunden sind.

2. Gehäuseinnenanordnung (1) nach Anspruch 1, **dadurch gekennzeichnet, daß** die wenigstens eine Zelle (2a, 2b; 20a, 20b, 20c) und der wenigstens eine umfangseitige ausgehöhlte Kühlkörper (3a, 3b; 30) eines jeden Moduls (M1, M2, M3, M4) auf der Grundlage von stranggepreßten Elementen sind.

3. Gehäuseinnenanordnung (1) nach Anspruch 1 oder 2, **dadurch gekennzeichnet, daß** der wenigstens eine umfangseitige ausgehöhlte Kühlkörper (3a, 3b; 30) ein stranggepreßtes Element mit oder ohne Rippe(n) (31; 301) und mit Strahlungsfläche(n) (32; 302) ist.

4. Gehäuseinnenanordnung (1) nach Anspruch 2 oder 3, **dadurch gekennzeichnet, daß** jedes Modul (M1, M2, M3, M4) ihrer Stufenstruktur wenigstens eine vorgebildete Zelle (2a; 20a) umfaßt.

5. Gehäuseinnenanordnung (1) nach einem der Ansprüche 1 bis 4, **dadurch gekennzeichnet, daß** jedes Modul (M1, M2, M3, M4) ihrer Stufenstruktur 1, 3, 4, 7, 12 oder 15 Zellen (2a+2b; 20a+20b+20c) umfaßt.

6. Gehäuseinnenanordnung (1) nach einem der Ansprüche 1 bis 5, **dadurch gekennzeichnet, daß** die Module aus Aluminium bestehen und/oder vorteilhafterweise sowohl das Haltesystem (5'+5+5") als auch die durchbrochenen Tragplatten (4; 40) aus einem Material mit hoher mechanischer Festigkeit, vorteilhafterweise aus rostfreiem Strahl bestehen.

7. Gehäuseinnenanordnung (1) nach einem der Ansprüche 1 bis 6, **dadurch gekennzeichnet, daß** das Haltesystem (5'+5+5") Zuganker (5) umfaßt, einerseits für das Positionieren und Verbinden der Tragplatten (4; 40) und andererseits für die Lastübertragung von der Gehäuseinnenanordnung (1) auf das Gehäuse (10), in dem sie aufgenommen werden soll.

8. Gehäuseinnenanordnung (1) nach Anspruch 7, **dadurch gekennzeichnet, daß** die Zuganker (5) das Positionieren eines jeden Moduls (M1, M2, M3, M4) auf seiner Tragplatte (4; 40) sicherstellen.

9. Gehäuseinnenanordnung (1) nach einem der Ansprüche 1 bis 8, **dadurch gekennzeichnet, daß** ihre Stufenstruktur 2, 3, 4, 5 oder 6 übereinander angeordnete Module (M1+M2+M3+M4) umfaßt.

10. Gehäuseinnenanordnung (1) nach einem der Ansprüche 1 bis 9, **dadurch gekennzeichnet, daß** die wenigstens eine Zelle (2a, 2b; 20a, 20b, 20c) einen quadratischen, sechseckigen oder kreisförmigen Querschnitt aufweist.

11. Gehäuse (10), das sich für die trockene Zwischenlagerung wenigstens eines abgebrannten Brennelements eignet, **dadurch gekennzeichnet, daß** es eine Gehäuseinnenanordnung (1) nach einem der Ansprüche 1 bis 10 enthält und einen Boden (9) umfaßt, der in der Lage ist, die Masse der Gehäuseinnenanordnung (1) sowie die des wenigstens einen Brennelements, das sich hierauf abzustützen soll, zu tragen.

12. Gehäuse (10) nach Anspruch 11, **dadurch gekennzeichnet, daß** das Gehäuse (10) und seine Gehäuseinnenanordnung (1), die vorteilhafterweise die Form von geraden Zylindern aufweisen, Querschnitte mit im wesentlichen gleicher (gleichen) Abmessung(en) haben.

13. Verfahren zur trockenen Zwischenlagerung wenigstens eines abgebrannten Brennelements, umfassend:
- das stabile Verpacken des wenigstens einen abgebrannten Brennelements in einem Gehäuse, innerhalb dessen die durch das wenigstens eine Element abgegebene Wärme ohne Veränderung der Struktur des wenigstens einen Elements abgeleitet wird,
- das Zwischenlagern des dichten Gehäuses in einem mittels Luftzirkulation gekühlten vertikalen Schachts,
**dadurch gekennzeichnet, daß** das Gehäuse ein Gehäuse (10) nach Anspruch 11 oder 12 ist.

14. Verfahren nach Anspruch 13, **dadurch gekennzeichnet, daß** das Gehäuse (10) mehrere Brennelemente enthält.

15. Verfahren nach Anspruch 13 oder 14, **dadurch gekennzeichnet, daß** das wenigstens eine abgebrannte Brennelement ein Element ist, dessen Leistung kleiner als oder gleich 5 kW ist bzw. beträgt.

## Claims

1. A casing internal part (1) suitable for the dry intermediate storage of at least one irradiated fuel element, **characterized in that** it has a tiered structure which comprises at least two superposed modules (M1, M2, M3, M4), each of said modules (M1, M2, M3, M4), made of a material that is a good conductor of heat, with compartment(s) (2a, 2b; 20a, 20b, 20c) for accommodating said fuel element(s) in the central part and with at least one hollowed-out peripheral heat sink (3a, 3b; 30), being arranged on a support plate (4; 40) that is perforated to allow said fuel element(s) through; the perforated support plates (4; 40) of said structure being positioned and assembled by means of a retaining system (5' + 5 + 5"), with a clearance (J) left between the top of the module of one tier (Mᵢ) and the perforated support plate (4; 40) of the tier (Mᵢ₊₁) immediately above.

2. The casing internal part (1) according to claim 1, **characterized in that** said at least one compartment (2a, 2b; 20a, 20b, 20c) and said at least one hollowed-out pheriphal heat sink (3a, 3b; 30) of each module (M1, M2, M3, M4) are based on extruded elements.

3. The casing internal part (1) according to claim 1 or 2, **characterized in that** said at least one hollowed-out peripheral heat sink (3a, 3b; 30) is an extruded element with or without fin(s) (31; 301) and with radiating surface(s) (32; 302).

4. The casing internal part (1) according to claim 2 or 3, **characterized in that** each module (M1, M2, M3, M4) of its tiered structure comprises at least one prefabricated compartment (2a; 20a).

5. The casing internal part (1) according to any one of claims 1 to 4, **characterized in that** each module (M1, M2, M3, M4) of its tiered structure comprises 1, 3, 4, 7, 12 or 15 compartments (2a + 2b; 20a + 20b +20c).

6. The casing internal part (1) according to any one of claims 1 to 5, **characterized in that** said modules are made of aluminum; and/or , advantageously and, said retaining system (5' + 5 + 5") and said perforated support plates (4; 40) are made of a material with high mechanical strength and are advantageously made of stainless steel.

7. The casing internal part (1) according to any one of claims 1 to 6, **characterized in that** said retaining system (5' + 5 + 5") comprises through bolts (5) for, on the one hand, positioning and assembling the support plates (4; 40) and, on the other hand, transferring load from said casing internal part (1) to the casing (10) in which it is intended to be housed.

8. The casing internal part (1) according to claim 7, **characterized in that** said through bolts (5) position each module (M1, M2, M3, M4) on its support plate (4; 40).

9. The casing internal part (1) according to any one of claims 1 to 8, **characterized in that** its tiered structure comprises 2, 3, 4, 5 or 6 superposed modules (M1 + M2 + M3 + M4).

10. The casing internal part (1) according to any one of claims 1 to 9, **characterized in that** said at least one compartment (2a, 2b; 20a, 20b, 20c) has a square, hexagonal or circular cross section.

11. A casing (10) suited to the dry intermediate storage of at least one irradiated fuel element, **characterized in that** it contains a casing internal part (1) according to any one of claims 1 to 10 and comprises a bottom (9) capable of withstanding the mass of said casing internal part (1) and that of said at least one fuel element that is going to rest against it.

12. The casing (10) according to claim 11, **characterized in that** said casing (10) and its casing internal part (1), which advantageously adopt the shape of right cylinders, have cross sections of roughly the same dimension(s).

13. A method for the dry intermediate storage of at least one irradiated fuel element comprising:
- the stable conditioning of said at least one irradiated fuel element in a casing within which the heat released by said at least one element is dissipated with no adverse effect on the structure of said at least one element,
- the intermediate storage of said sealed casing in a vertical pit cooled by the circulation of air,
**characterized in that** said casing is a casing (10) according to claim 11 or 12.

14. The method according to claim 13, **characterized in that** said casing (10) contains several fuel elements.

15. The method according to claim 13 or 14, **characterized in that** said at least one irradiated fuel is an element the power of which is 5kW or lower.
